# EUROPÄISCHE PATENTSCHRIFT

(11) **EP 0 662 237 B1**
(45) Veröffentlichungstag und Bekanntmachung des Hinweises auf die Patenterteilung: **03.09.1997**
(21) Anmeldenummer: 93919113.6
(22) Anmeldetag: 20.08.1993
(51) Int. Cl.: G21G 1/04, G21G 4/08, G21C 19/46

(54) **VERFAHREN ZUM ABTRENNEN VON SPALTMOLYBDÄN**
METHOD OF SEPARATING FISSION MOLYBDENUM
PROCEDE POUR LA SEPARATION DE MOLYBDENE DE FISSION

(30) Priorität: 24.09.1992 DE 4231997
(43) Veröffentlichungstag der Anmeldung: 12.07.1995
(73) Patentinhaber: Forschungszentrum Karlsruhe GmbH, 76133 Karlsruhe (DE)
(72) Erfinder: SAMEH, Abdel, Hadi, Ali, D-76275 Ettlingen (DE); LEIFELD, Wolfdietrich, D-76344 Eggenstein-Leopoldshafen (DE)
(74) Vertreter: Rückert, Friedrich, Dr.
(86) Internationale Anmeldenummer: EP9302229
(87) Internationale Veröffentlichungsnummer: WO9407247

(56) Entgegenhaltungen:
- EP-A- 0 245 588
- FR-A- 2 218 622
- FR-A- 2 246 498
- FR-A- 2 344 498
- GB-A- 2 067 343
- CHEMICAL ABSTRACTS, vol. 99, no. 24, 12. Dezember 1983, Columbus, Ohio, US; abstract no. 202098t, SAMEH, A. ALI ET AL 'Production of fission molybdenum on a technical scale at the Nuclear Research Center Karlsruhe'
- DATABASE WPI Week 8806, Derwent Publications Ltd., London, GB; AN 88-041090 & SU,A,536 665 (BIOPHYS) 23. Juli 1987 in der Anmeldung erwähnt

## Beschreibung

Die Erfindung betrifft ein Verfahren zum Abtrennen von Spaltmolybdän gemäß dem Oberbegriff des ersten Patentanspruchs.

Ein solches Verfahren bildet einen Teilschritt in einem Produktionsverfahren für Spaltmolybdän. Bei diesem Produktionsverfahren wird ein Kernbrennstoff (z. B. eine Uran-Aluminium-Legierung mit der ungefähren Zusammensetzung UAl₃, die mit Aluminium umhüllt ist) in einem Reaktor bestrahlt, wobei sich aus dem Uran Spaltprodukte bilden. Von diesen Spaltprodukten ist insbesondere das Spaltmolybdän und hiervon das Isotop ⁹⁹Mo von besonderem Interesse, weil sich aus ⁹⁹Mo durch radioaktiven Zerfall das radioaktive Isotop ^{99m}Tc bildet, das in der Medizin zur Diagnose von Organfunktionsstörungen und Tumorkrankheiten eingesetzt wird.

Der bestrahlte Kernbrennstoff wird bei der Aufarbeitung zuerst mit einer alkalischen Lösung behandelt, wobei das Aluminium und eine Reihe von Spaltprodukten wie Antimon, Jod, Zinn, Tellur sowie das gewünschte Molybdän in Lösung gehen. In mehreren nachfolgenden Verfahrensschritten wird das Molybdän von den begleitenden Spaltprodukten abgetrennt. Zur Abtrennung werden bei einem im Kernforschungszentrum Karlsruhe entwickelten Aufarbeitungsprozeß chromatographische Säulen eingesetzt.

Die alkalische Lösung der Spaltprodukte und des Aluminiums durchläuft bei diesem Prozeß eine erste Säule, die aus einem stark basischen Austauscher (AG 1x8^{R}, 50 - 500 mesh) besteht. Hierbei wird Molybdän quantitativ zusammen mit einem Teil der anderen Spaltprodukte an der Säule festgehalten, während ein großer Teil der unerwünschten Spaltprodukte die Säule verläßt.

Nach mehreren Waschschritten wird das Molybdän und geringe Mengen an begleitenden anderen Spaltprodukten durch Eluieren mit 1 - 1,5 M Schwefelsäure und anschließend mit 0,5 M Ammoniumhydroxid und 1 M Natriumsulfat aus der Säule entfernt und in Lösung gebracht.

Der Lösung werden Rhodanid-Ionen und Reduktionsmittel (Kaliumjodid und Natriumsulfit) zugesetzt. Unter diesen Bedingungen bildet sich der Molybdän-Komplex [Mo(SCN)₆]³⁻ aus. Dieser Molybdän-Komplex läßt sich selektiv, wie etwa in der DE 26 10 948 Al oder in der DE 27 58 783 C3 beschrieben, an einem organischen Ionenaustauscher des Typs eines chelatbildenden Kunstharz es auf der Basis eines Styrol-Divinylbenzol-Copolymersats mit funktionellen Methylen-nitrilo-diacetat-Gruppen (CHELEX 100^{R}) binden, wodurch die Verunreinigungen des Spaltmolybdäns wirkungsvoll abgetrennt werden.

Der hier skizzierte Prozeß ist detailliert in der Veröffentlichung "Production of Molybdenum-99" von Sameh A. Ali in den Proceedings International Symposium on Isotope Applications, Taipei, Taiwan, Republic of China (December 4 - 5, 1986), Seiten 291 bis 303 beschrieben.

Bei einem solchen Aufarbeitungsprozeß ist es von höchster Bedeutung, daß sämtliche Verfahrensschritte möglichst schnell und effizient ablaufen, da das erwünschte Spaltisotop ⁹⁹Mo fortwährend zerfällt und die Ausbeute nicht nur durch die Effizienz der Verfahrensschritte, sondern auch durch deren Zeitbedarf bestimmt wird. Aus diesem Grund wird auch versucht, das Volumen der zu behandelnden Lösungen möglichst klein zu halten. Teilschritte, die eine solche Verbesserung bewirken und zusätzlich in das bestehende Fließschema des Aufarbeitungsprozesses integriert werden oder einzelne Verfahrensschritte ersetzen, sind daher von wirtschaftlichem Interesse.

Einen solchen Teilschritt stellt das Verfahren der eingangs genannten Art dar. Ein solches Verfahren ist aus der Veröffentlichung von J. Bürck, Sameh A. Ali und H. J. Ache mit dem Titel "Sorption Behaviour of Molybdenum on Different Metal Oxide Ion Exchangers" in Solvent Extraction and Ion Exchange, **6**(1) (1988) 167 - 182 bekannt. In dieser Veröffentlichung wird das Molybdän-Rückhaltevermögen eines Festbetts aus den Metalloxiden Aluminiumoxid, Zinnoxid, Mangandioxid oder Antimonoxid untersucht. Obwohl das Molybdän-Rückhaltevermögen eines Festbetts aus Mangandioxid sich als sehr hoch erwiesen hat, kommen die Autoren (auf S. 177) zum Schluß, daß ein solches Festbett wegen seiner Empfindlichkeit gegen mechanischen Abrieb zur Abtrennung von Molybdän nicht brauchbar ist. Bei der Behandlung von Molybdän enthaltenden Lösungen mit Mangandioxid bildeten sich sehr feine molybdänbeladene Partikel, die durch Filtration von der flüssigen Phase nicht abtrennbar waren und Verluste an Spaltmolybdän bewirkten.

Der Erfindung liegt daher die Aufgabe zugrunde, dieses Verfahren so zu modifizieren, daß es zur Trennung des Spaltmolybdän von anderen Spaltprodukten eingesetzt werden kann und insbesondere die Molybdän-Verluste, die durch das Auswaschen von sehr feinen molybdänbeladenen Partikeln aus einem Mangandioxid-Festbett entstehen, zu minimieren oder völlig zu vermeiden. Ferner soll ein Verfahren vorgeschlagen werden, das sich in den oben skizzierten Aufarbeitungsprozeß in der Weise integrieren läßt, daß insgesamt ein schnellerer und effizienterer Prozeßablauf möglich wird.

Die Aufgabe wird erfindungsgemäß durch den im ersten Patentanspruch gekennzeichneten Verfahrensschritt gelöst. Vorteilhafte Ausgestaltungen des erfindungsgemäßen Verfahrens sind in den abhängigen Ansprüchen beschrieben.

Mangandioxid wird z. B. in einer Körnung von 0,1 bis 0,5 mm ausgeliefert, die an sich für die Verwendung als Festbett in einer Säule gut geeignet wäre. Bei jeder Bewegung der Körner gegeneinander entsteht jedoch feiner Staub, der aus der Säule ausgetragen wird und bei dem Verfahren der eingangs genannten Art Spaltmolybdän mit sich trägt. Die Lösung des Problems gelingt in überraschend einfacher Weise dadurch, daß das Festbett durch Naßsedimentation von den feinen Partikeln befreit wird. Die Naßsedimentation erfolgt in der einfachsten Weise dadurch, daß das Mangandioxid mit einer Flüssigkeit, im allgemeinen Wasser, aufgeschlämmt wird, wonach man die Sedimentation abwartet und das überstehende, durch die feinen Partikel getrübte Wasser entfernt.

Da Mangandioxid ohnehin vorzugsweise in einer Chromatographiesäule eingesetzt wird, besteht eine zusätzliche Möglichkeit zur Entfernung von Resten der feinen Partikel darin, die Säule mit dem naßsedimentierten Mangandioxid zu füllen, sie mit Wasser zu fluten und von unten kurzzeitig Luft einzublasen. Hierbei werden die Restmengen der feinen Partikel mit dem Wasser, das dann ggf. noch trübe erscheint, über den Kopf der Säule entfernt. Dieses Verfahren kann mehrfach wiederholt werden. Danach ist die Säule von allen feinen Partikeln befreit und einsatzbereit. Die mit dem spaltmolybdän und einem Teil der anderen Spaltprodukte beladene Säule kann wie üblich eluiert werden.

Wegen der mangelnden Abriebfestigkeit der Mangandioxid-Körner bilden sich nach längerer Betriebszeit erneut feine Partikel, die in der beschriebenen Weise entfernt werden müßten. Wurde die Säule bereits mit Spaltmolybdän betrieben, so fällt hierbei kontaminiertes Wasser an. Deshalb erfolgt die Rückgewinnung des am Mangandioxid-Festbett adsorbierten Spaltmolybdäns bevorzugt gemäß Anspruch 3 nicht durch Eluieren des Festbetts, sondern durch seine vollständige Auflösung. Eine solche Ausgestaltung des erfindungsgemäßen Verfahrens läßt sich insbesondere in den oben skizzierten Aufarbeitungsprozeß integrieren und zwar vorzugsweise zwischen dem Adsorptionsschritt am stark basischen Ionenaustauscher und dem Adsorptionsschritt an der Chelex-Kolonne.

Bei diesem Aufarbeitungsprozeß wird, wie erwähnt, die erste Säule, die aus dem stark basischen Austauscher (AG 1x8^{R}, 50 - 500 mesh, etwa 200 bis 400 mesh) besteht, nach der Beladung mit dem Spaltmolybdän und den anschließenden Waschschritten mit Schwefelsäure und danach mit Ammoniumhydroxid und Natriumsulfat eluiert. Diese Eluierung ist nicht optimal; sie mußte gewählt werden, um geeignete Betriebsbedingungen für die nachfolgende Chelex-Kolonne zu schaffen. Die Chelex-Kolonne darf keinesfalls mit Nitraten in Berührung kommen.

Eine wesentlich effektivere Eluierungslösung stellen Salpetersäure oder eine Nitratlösung oder deren Gemisch dar. Von einer solchen Eluierungslösung muß - verglichen mit den bisher verwendeten Eluierungslösungen - nur das halbe Volumen eingesetzt werden. Wird das Verfahren gemäß Anspruch 3 nach dem Adsorptionsschritt an dem stark basischen Ionenaustauscher durchgeführt, kann der beladene stark basische Ionenaustauscher mit Salpetersäure oder Nitraten eluiert werden. Das Eluat wird dann in die Mangandioxid-Säule eingeleitet, wo Spaltmolybdän quantitativ adsorbiert wird.

Die Eluierung von Spaltmolybdän aus dem stark basischen Ionenaustauscher kann grundsätzlich mit einer 0,5 M NO₃⁻ - Lösung durchgeführt werden, wobei es freigestellt bleibt, ob die Nitrationen aus Salpetersäure oder aus einem Salz stammen. Höhere Säure- und/oder Salzkonzentrationen können eingesetzt werden. Als optimal erwies sich ein Konzentrationsbereich um ca. 3 mol/l NO₃⁻, wobei mindestens 1 mol/l von Salpetersäure stammt.

Die Nitrationen des Eluats lassen sich einfach durch Waschen der mit dem Spaltmolybdän beladenen Mangandioxid-Säule mit Wasser entfernen, so daß sie die Wirkung der nachfolgenden Chelex-Kolonne nicht beeinträchtigen. Das beladene und gewaschene Mangandioxid-Festbett wird danach insgesamt aufgelöst und mit der hierbei erhaltenen Lösung wird die Chelex-Kolonne beaufschlagt. Das Mangandioxid stört den Betrieb der Chelex-Kolonne nicht, denn es wird hierbei in die zweite Oxidationsstufe reduziert, wandert quantitativ durch die Chelex-Kolonne und gelangt gemeinsam mit den mitgeschleppten Spaltprodukten in die Abfalltanks.

Zum Auflösen des Mangandioxid-Festbetts wird vorzugsweise Schwefelsäure in einer Konzentration von 1 bis 7 mol/1 verwendet. Am besten geeignet ist Schwefelsäure einer Konzentration von 2 mol/l. Besonders bevorzugt wird eine Schwefelsäure eingesetzt, der Rhodanid-Ionen in einer Konzentration von 0,1 bis 3 mol/1 und ein Reduktionsmittel zugesetzt sind. Als Reduktionsmittel eignen sich insbesondere Jodide, z. B. Kaliumjodid, und Sulfite, z. B. Natriumsulfit.

Wird die Auflösung des Mangandioxid-Festbetts in einer solchen Lösung durchgeführt, können die bisher vorgesehenen Betriebsbedingungen für die Chelex-Kolonne eingehalten werden. Die Menge an Reduktionsmittel muß hierbei so bemessen sein, daß trotz der erforderlichen Reduktion des Mangandioxids in den zweiwertigen Zustand, durch die Reduktionsmittel verbraucht wird, der oben beschriebene Molybdän-Komplex entsteht. Vorzugsweise wird daher die Zusammensetzung und die Konzentration der Komponenten in der Lösung so gewählt, daß nach dem Auflösen des Mangandioxid-Festbetts die optimalen Betriebsbedingungen bezüglich Zusammensetzung und Konzentration der Lösung für die nachfolgende Chelex-Kolonne vorliegen.

Durch die Integration des Verfahrens gemäß Anspruch 3 in den bisher durchgeführten Aufarbeitungsprozeß ergeben sich eine Reihe von zusätzlichen Vorteilen.

Bisher mußte das Eluat des stark basischen Ionenaustauschers (AG lx8) in einem (aus Korrosionsgründen aus Tantal bestehenden) Behälter auf die Bedingungen der Chelex-Kolonne eingestellt werden; d. h., das Volumen des Eluats und die Schwefelsäurekonzentration wurde ermittelt und danach wurden die entsprechenden Mengen an Rhodanid, Jodid, Sulfit und ggf. zusätzlicher Schwefelsäure zugegeben. Dieser Vorgang war sehr zeitaufwendig. Gemäß einer besonders bevorzugten Ausführungsform des erfindungsgemäßen Verfahrens wird das Mangandioxid-Festbett mit einer vorbereiteten Lösung aus Schwefelsäure, Rhodanid, Sulfit und Jodid aufgelöst, so daß die dadurch erhaltene Lösung unmittelbar und ohne weitere zeitraubende Vorbehandlung in die Chelex-Kolonne eingeleitet werden

Ein weiterer, in der Praxis wichtiger Vorteil besteht in der Unempfindlichkeit des Mangandioxid-Festbetts gegenüber Aciditäts- und Salzgehaltsschwankungen sowohl bei der Eluierung des stark basischen Ionenaustauschers und der Aufgabe auf das Mangandioxid-Festbett als auch bei der Auflösung des Festbetts und der nachfolgenden Beladung der Chelex-Kolonne.

Die Erfindung wird im folgenden anhand eines Ausführungsbeispiels näher erläutert.

Die nachfolgend aufgeführten Daten sind Ergebnisse von Molybdänrückhalteexperimenten an mit hydratisiertem Mangandioxid (chemische Formel MnO₂·n H₂O) gefüllten Kolonnen. Mangandioxid ist im Handel unter dem Namen "Manox" erhältlich (Produkt der Recherche Appliquée du Nord (RAN), Institut des Developement, Frankreich).

Die eingesetzten Kolonnen enthielten jeweils 20 g Manox mit einer Partikelgröße von 0,2 bis 0,5 mm. Feinere Partikel wurden durch Naßsedimentation entfernt. Hierzu wurden die Kolonnen mit Wasser gefüllt und von unten kurzzeitig Luft eingeblasen. Hierbei trat trübe erscheinendes Wasser am Kopf der Kolonne aus. Dieser Vorgang wurde solange (zwei- bis viermal) wiederholt, bis das am Kopf der Kolonne austretende Wasser absolut klar war.

Die Aufgabe des Molybdäns auf dieses Festbett erfolgte bei zwei Experimenten aus 3 M Salpetersäure; bei zwei weiteren Experimenten erfolgt die Aufgabe des Molybdäns aus einem Gemisch, das 2 molar an Natriumnitrat und 1 molar an Salpetersäure ist. Alle Lösungen enthielten jeweils 10 mg natürliches Molybdän und ⁹⁹Mo, das als Indikator zugesetzt wurde, um die analytische Erfassung und Bilanzierung über Gammaspektroskopie zu ermöglichen. Das Volumen der jeweiligen Aufgabelösung betrug 2 l.

Nachdem die Einleitung der jeweiligen Lösung in die mit Mangandioxid gefüllte Kolonne beendet war, wurde zuerst mit 1 1 1 M Salpetersäure und anschließend mit 1 1 reinem Wasser gewaschen.

Anschließend erfolgte die Auflösung des beladenen Mangandioxid-Festbetts in 2 l einer SCN⁻ -, SO₃²⁻ - und J⁻ - haltiger 2 M Schwefelsäure. Diese Lösung wurde durch eine mit 50 g Chelex 100 gefüllte Kolonne geleitet, nachdem die Kolonne durch eine Schwefelsäure enthaltende Lösung gleicher Zusammensetzung vorkondionioniert wurde. Chelex 100 ist - wie erwähnt - ein Chelat bildender Ionenaustauscher auf Basis eines Syrol-Divinylbenzol-Copolymers mit funktionellen Iminodiacetat-Gruppen; es wurde von der Firma BIO RAD USA, Richmond, Californien bezogen. Die beladene Kolonne wurde anschließend der Reihe nach mit je 2 1 Rhodanid und Sulfit enthaltender 2 M Schwefelsäure und 700 ml Wasser gewaschen. Die Molybdäneluierung wurde jeweils mit 1 l auf 50 °C erwärmter 1 M Natronlauge vorgenommen.

Eine wichtige Frage betraf das Verhalten von mit dem Molybdänprozeßstrom eventuell mitgeschleppten weiteren Spaltprodukten wie Cer, Jod, Ruthenium un Zirkonium. Um diese Frage zu klären, wurde unter identischen Bedingungen (gleiche Festbettmengen, gleicher Mo-Gehalt, in Konzentration und Menge gleiche Lösungen) die entsprechenden Experimente mit Spaltproduktlösungen durchgeführt. Der erste Versuch wurde nur in Gegenwart von Spaltproduktindikatoren vorgenommen. Der zweite Versuch wurde in Gegenwart von 10 mg eines stabilen Isotopengemisches vom jeweiligen Spaltnuklid durchgeführt. Die Versuchsbilanzierung erfolgte durch gammaspektroskopische Messung der zugesetzten radioaktiven Indikatoren ⁹⁹Mo, ¹⁴⁴Ce, ¹²³J, ¹⁰³Ru, und ⁹⁵Zr.

Es zeigte sich, daß die Rückhaltung der begleitenden Spaltprodukte am Mangandioxid stark von ihrer Konzentration in der Aufgabelösung abhängt. Bis auf Ruthenium, das zu ca 75 % durch die Kolonne wandert, werden Indikatormengen von Cer, Zirkonium und das damit im Gleichgewicht befindliche Niob vollständig an der Festbettphase fixiert. Deutlich anders ist die Situation, wenn wägbare Mengen dieser Nuklide vorliegen. In diesem Fall sinkt ihre Rückhaltung teilweise deutlich ab. Sie beträgt, wie aus den in Tabelle 2 angegebenen Daten hervorgeht, 1 % für Ce, 20 % für Ru und 55 % für Zr. Da beim Einsatz eines Mangandioxid-Festbetts tatsächlich nur noch unwägbare Mengen der begleitenden Spaltnuklide vorliegen, werden diese bis auf das Ruthenium (das auch im Indikatormaßstab zu ca. 75 % durch die Kolonne wandert, vollständig zurückgehalten.

Anders verhält sich das Jod, das je nach Zusammensetzung der Lösung anionisch oder elementar vorliegt und somit vollständig durch die Kolonne wandert. Damit zeigt sich, daß das Mangandioxid-Festbett neben seiner Eignung zur Straffung des gesamten Aufarbeitungsprozesses und Minimierung seiner Abfälle einen weiteren Beitrag zur Produktreinheit leisten kann und zwar in Bezug auf die am schwierigsten zu beherrschenden Elemente Ruthenium und Jod.

Die Versuchsergebnisse sind in den beiden folgenden Tabellen protokolliert.

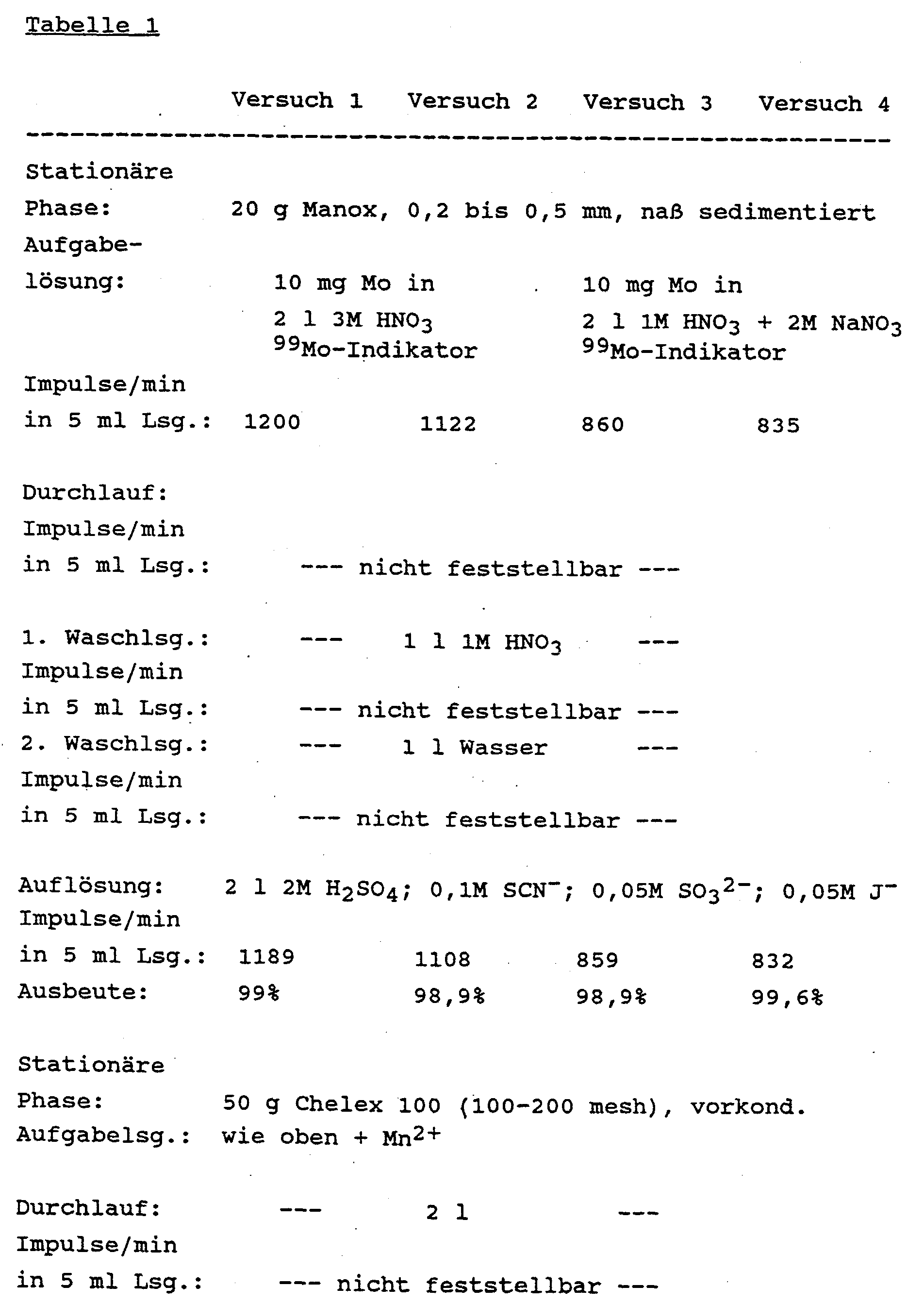

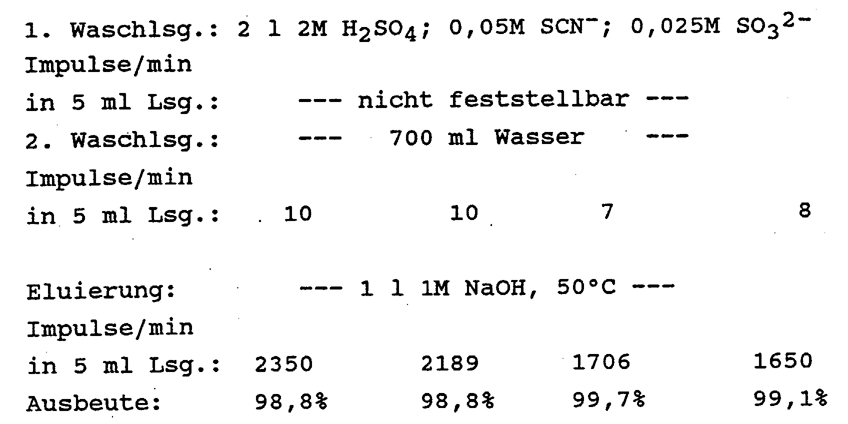

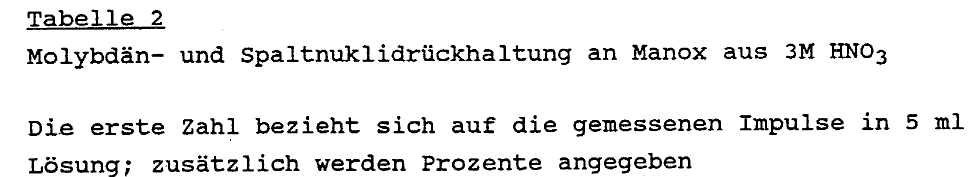

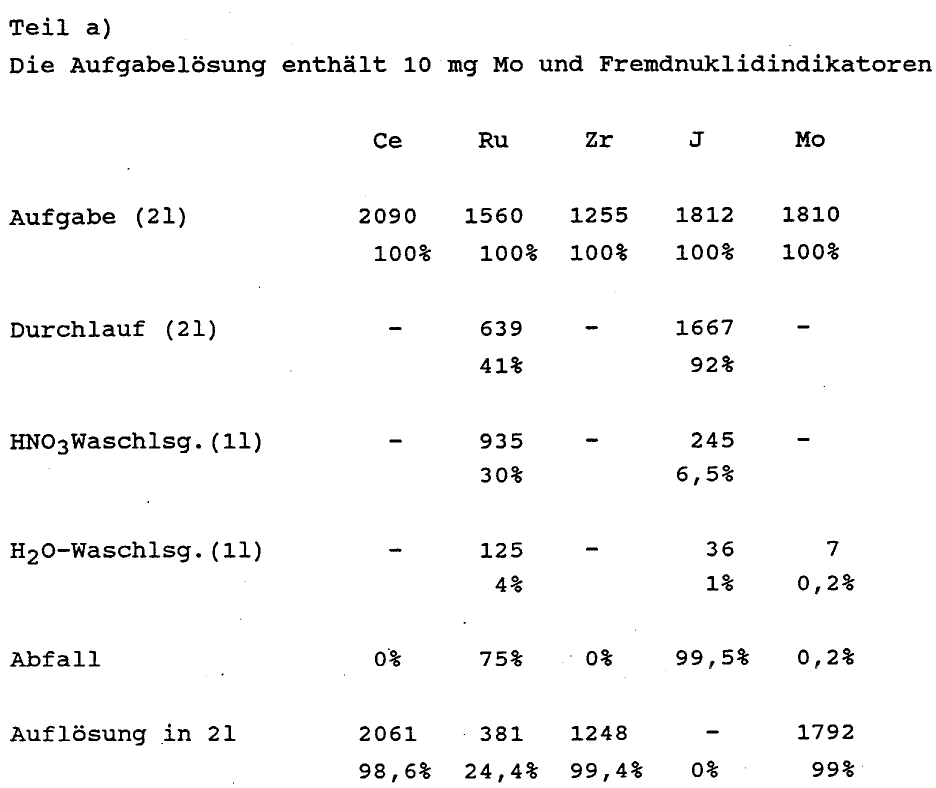

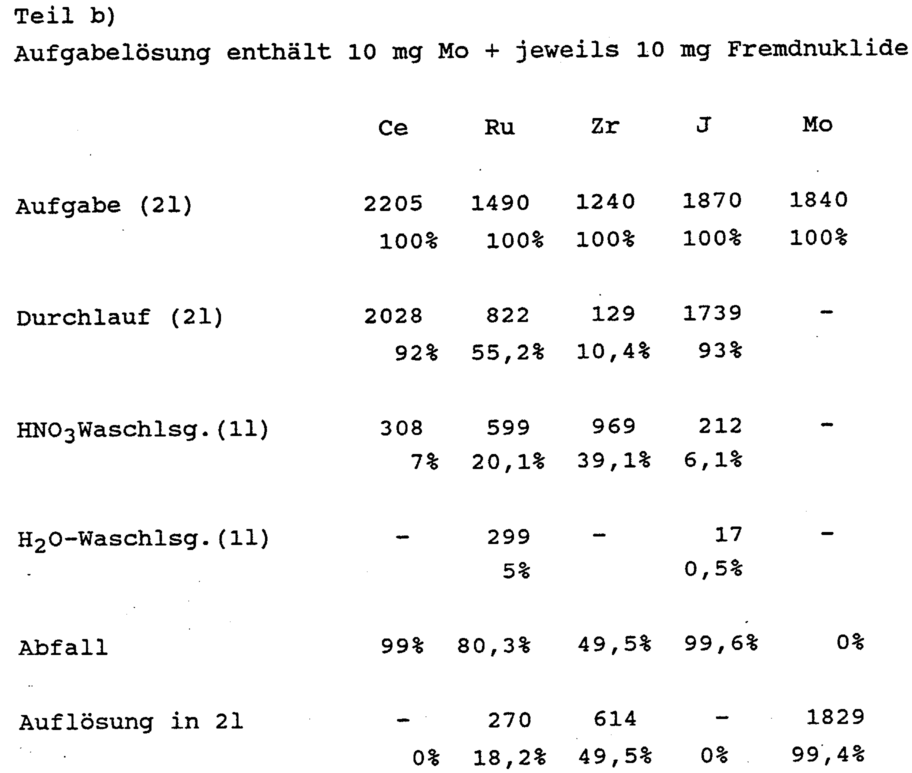

## Patentansprüche

1. Verfahren zum Abtrennen von Spaltmolybdän von anderen Spaltprodukten, bei dem
a) eine wäßrige Lösung des Spaltmolybdän und der anderen Spaltprodukte hergestellt wird,
b) die wäßrige Lösung mit einem Festbett aus Mangandioxid in Kontakt gebracht wird, wobei das Spaltmolybdän und ein Teil der anderen Spaltprodukte am Festbett zurückgehalten und die wäßrige Lösung mit den übrigen Spaltprodukten von dem Festbett getrennt wird,
c) aus dem mit dem Spaltmolybdän beladenen Festbett das Spaltmolybdän zurückgewonnen wird,
dadurch gekennzeichnet, daß
ein solches Festbett aus Mangandioxid eingesetzt wird, bei dem zuvor durch Naßsedimentation feine Partikel mit der Überstehenden Flüssigkeit entfernt wurden.

2. Verfahren nach Anspruch 1, dadurch gekennzeichnet, daß die feinen Partikeln zusätzlich durch Fluten mit einer Flüssigkeit und Einblasen eines Gases entfernt werden.

3. Verfahren nach Anspruch 2, dadurch gekennzeichnet, daß aus dem mit dem Spaltmolybdän beladenen Festbett das Spaltmolybdän durch Auflösen des Festbetts wiedergewonnen wird.

4. Verfahren nach Anspruch 3, dadurch gekennzeichnet, daß zum Auflösen des Festbetts Schwefelsäure eingesetzt wird.

5. Verfahren nach Anspruch 4, dadurch gekennzeichnet, daß der Schwefelsäure Rhodanid-Ionen und ein Reduktionsmittel zugesetzt sind.

6. Verfahren nach Anspruch 5, dadurch gekennzeichnet, daß als Reduktionsmittel Sulfit-Ionen und/oder Jodid-Ionen eingesetzt werden.

## Claims

1. Method of separating fission molybdenum from other fission products, wherein
a) an aqueous solution of the fission molybdenum and the other fission products is produced;
b) the aqueous solution is brought into contact with a fixed bed of manganese dioxide, the fission molybdenum and a portion of the other fission products being retained on the fixed bed, and the aqueous solution containing the remaining fission products being separated from the fixed bed; and
c) the fission molybdenum being recovered from the fixed bed charged with the fission molybdenum,
characterised in that such a fixed bed of manganese dioxide is used, wherein fine particles have been previously removed by wet sedimentation with the overlying liquid.

2. Method according to claim 1, characterised in that the fine particles are additionally removed by flooding with a liquid and injecting a gas.

3. Method according to claim 2, characterised in that the fission molybdenum is recovered from the fixed bed, which is charged with the fission molybdenum, by dissolving the fixed bed.

4. Method according to claim 3, characterised in that sulphuric acid is used to dissolve the fixed bed.

5. Method according to claim 4, characterised in that rhodanide ions and a reducing agent are added to the sulphuric acid.

6. Method according to claim 5, characterised in that sulphite ions and/or iodide ions are used as the reducing agent.

## Revendications

1. Procédé de séparation de molybdène de fission d'autres produits de fission, dans lequel,
a) une solution aqueuse du molybdène de fission et des autres produits de fission est produite,
b) la solution aqueuse est mise en contact avec un lit fixe en dioxyde de manganèse, le molybdène de fission et une partie des autres produits de fission étant retenus sur le lit fixe et la solution aqueuse étant séparée avec les autres produits de fission du lit fixe,
c) à partir du lit fixe chargé de molybdène de fission on récupère le molybdène de fission,
caractérisé en ce qu'
un tel lit fixe en dioxyde de manganèse est utilisé, dans lequel on a éliminé auparavant par sédimentation humide de fines particules avec débordement de liquide.

2. Procédé selon la revendication 1,
caractérisé en ce que
les fines particules sont éliminées additionnellement par inondation avec un liquide et insufflation d'un gaz.

3. Procédé selon la revendication 2,
caractérisé en ce qu'
à partir du lit fixe de molybdène de fission on récupère le molybdène de fission par dissolution du lit fixe.

4. Procédé selon la revendication 3,
caractérisé en ce qu'
on utilise de l'acide sulfurique pour dissoudre le lit fixe.

5. Procédé selon la revendication 4,
caractérisé en ce qu'
on ajoute à l'acide sulfurique des ions de sulfocyanure et un agent réducteur.

6. Procédé selon la revendication 5,
caractérisé en ce qu'
on utilise comme agent réducteur des ions de sulfites et/ou des ions d'iodure.
